# EUROPEAN PATENT APPLICATION

(11) **EP 4 588 562 A1**
(43) Date of publication of application: **23.07.2025**
(21) Application number: 23865892.6
(22) Date of filing: 15.09.2023
(51) Int. Cl.: B01J 29/74, B01J 23/02, B01J 35/60, B01J 37/02, B01J 37/08, B01J 37/30, B01J 23/10

(54) **AMMONIA DEHYDROGENATION CATALYST, METHOD FOR PRODUCING SAME, AND METHOD FOR PRODUCING HYDROGEN USING SAME**

(30) Priority: 16.09.2022 KR 20220117250; 28.02.2023 KR 20230026988
(71) Applicant: HD Hyundai Oilbank Co., Ltd., Seosan-si, Chungcheongnam-do 31902 (KR)
(72) Inventor: KIM, Myoung Yeob, Seongnam-si, Gyeonggi-do 13627 (KR); KIM, Jin Sung, Suwon-si, Gyeonggi-do 16514 (KR); JIN, Min Gyu, Yongin-si, Gyeonggi-do 16902 (KR); LEE, Ho In, Yongin-si, Gyeonggi-do 17066 (KR)
(74) Representative: Schwarz & Partner Patentanwälte GmbH
(86) International application number: PCT/KR2023/013889
(87) International publication number: WO 2024/058596

(57) **Abstract**

An ammonia dehydrogenation catalyst, a method for producing same, and a method for producing hydrogen using same are disclosed. The disclosed ammonia dehydrogenation catalyst comprises: a zeolite having an intracrystalline cation; and an alkali metal and ruthenium impregnated on the zeolite.

## Description

### [Technical Field]

The present disclosure relates to a catalyst for ammonia dehydrogenation, a method of preparing the same, and a method of preparing hydrogen using the same. More specifically, the present disclosure relates to a catalyst for ammonia dehydrogenation capable of preparing hydrogen at a high yield from ammonia, a method of preparing the same, and a method of preparing hydrogen using the same.

### [Background Art]

Recently, global interest in the production and utilization of hydrogen energy (blue and green hydrogen) as a sustainable and eco-friendly alternative energy source that does not emit carbon dioxide has been increasing.

Methods of preparing hydrogen energy include green hydrogen production through water electrolysis and pink hydrogen production based on nuclear power. In particular, ammonia is not only a hydrogen carrier but is also useful as energy itself. In addition, hydrogen may be prepared from ammonia through dehydrogenation using an appropriate catalyst.

The preparation of hydrogen from ammonia using the methods described above may be applied to the following fields. First, oil refineries such as Hyundai Oilbank are planning to modify and supplement existing gas stations that already provide gasoline, diesel, and LPG, and create future gas stations (composite energy stations) that provide all types of transportation fuel and energy, including hydrogen and electric charging, in one place. In particular, when "hydrogen-based vehicles using fuel cells" and the like currently under development by Hyundai Motors are commercialized, oil refineries are expected to supply hydrogen to the aforementioned future gas stations, and therefore, hydrogen prepared from ammonia is expected to be supplied to gas stations and used as a raw material for fuel cells. In addition, the oil refining and petrochemical industries require a large amount of hydrogen when producing various products. When environmentally friendly hydrogen that is prepared through the ammonia dehydrogenation process and thus does not emit carbon dioxide is used, rather than hydrogen prepared through a process of emitting a significant amount of carbon dioxide, such as the conventional steam methane reforming process for natural gas reforming, it is expected that the effect of reducing carbon dioxide emissions can be achieved. In addition, the use of hydrogen produced through the ammonia dehydrogenation reaction for power generation can also be considered. Ammonia itself is a raw material to generate electricity and may be used to produce energy without emitting carbon dioxide through combustion. However, ammonia has deep-seated problems due to unique characteristics such as low calorific value and difficulty in ignition. To solve these problems, a method of converting only a part of ammonia into hydrogen and then producing energy through ammonia-hydrogen co-firing power generation, or converting an entire amount of ammonia into hydrogen and then producing energy through hydrogen combustion power generation has been suggested. In this case, it is considered that it will be possible to produce energy in an environmentally friendly manner using the advantages of hydrogen, such as high calorific value and ease of ignition. In addition, energy can be produced from ammonia in an environmentally friendly manner, not only through co-firing or combustion with hydrogen, but also through the hydrogen converted from ammonia as a fuel cell. More specifically, only part or all of ammonia may be converted into hydrogen and energy corresponding to the required electricity capacity may be produced using the hydrogen thus prepared as a raw material for fuel cells. Another use of ammonia is as a fuel for ships. Similar to the previous electricity generation cases, energy for ship operation may be produced using ammonia as fuel for ships. Therefore, when only part or all of the ammonia is converted to hydrogen, the ship may be driven by co-combustion of ammonia and hydrogen, combustion of hydrogen, or energy production through combination with additional fuel cells.

Accordingly, interest in the technology for preparing hydrogen by dehydrogenating ammonia is increasing all over the world. When a high-performance catalyst for ammonia dehydrogenation is developed, it is considered that hydrogen may be prepared through such catalyst and the hydrogen thus prepared may be utilized in a variety of applications.

In general, ruthenium (Ru)-based catalysts used to prepare highly active catalysts for ammonia dehydrogenation are expensive. In addition, a problem in which catalyst deactivation is accelerated occurs when the ammonia dehydrogenation reaction temperature is high. Therefore, it is essential to develop a catalyst that has high activity even at low temperatures while minimizing the Ru content. Accordingly, currently, there is a need for the development of such a catalyst all over the world.

### [Disclosure]

### [Technical Problem]

It is one embodiment of the present invention to provide a catalyst for ammonia dehydrogenation capable of preparing hydrogen from ammonia at a high yield.

It is other embodiment of the present invention to provide a method of preparing the catalyst for ammonia dehydrogenation.

It is still another embodiment of the present invention to provide a method of preparing hydrogen from ammonia using the catalyst for ammonia dehydrogenation.

### [Technical Solution]

In accordance with the present disclosure, the above and other objects can be accomplished by the provision of a catalyst for ammonia dehydrogenation comprising:
a zeolite having an intracrystalline cation; and
an alkali metal and ruthenium impregnated in the zeolite.

The intracrystalline cation may comprise a hydrogen ion (H⁺), a sodium ion (Na⁺), a potassium ion (K⁺), a calcium ion (Ca²⁺), a magnesium ion (Mg²⁺), a rubidium ion (Rb⁺), a cesium ion (Cs⁺), or a combination thereof.

The catalyst for ammonia dehydrogenation may comprise 5 to 50 parts by weight of the alkali metal impregnated based on 100 parts by weight of the zeolite.

The alkali metal may comprise lithium (Li), sodium (Na), potassium (K), rubidium (Rb), cesium (Cs), francium (Fr), or a combination thereof.

The catalyst for ammonia dehydrogenation may comprise 0.5 to 10 parts by weight of the ruthenium impregnated based on 100 parts by weight of the zeolite.

The catalyst for ammonia dehydrogenation may comprise 1 to 10 parts by weight of the ruthenium impregnated based on 100 parts by weight of the zeolite.

The zeolite may have a Si/Al atomic ratio of 1 to 30.

The zeolite may have a BET surface area of 300 to 900 m²/g.

The catalyst for ammonia dehydrogenation may further comprise an alkaline earth metal, a lanthanide metal, or a combination thereof impregnated in the zeolite.

The total amount of the alkali metal, the alkaline earth metal, and the lanthanide metal impregnated may be more than 5 parts by weight and not more than 50 parts by weight based on 100 parts by weight of the zeolite.

The zeolite may comprise zeolite X, zeolite Y, USY zeolite, ZSM-5, beta zeolite, chabazite zeolite, SAPO series zeolite, mordenite zeolite, zeolite L, zeolite A, RFCC spent catalyst, or a combination thereof.

In accordance with another aspect of the present disclosure, there is provided a method of preparing a catalyst for ammonia dehydrogenation comprising:
providing a zeolite having an intracrystalline cation (S10);
impregnating an alkali metal on the zeolite (S20);
drying the alkali metal-impregnated zeolite (S30);
impregnating ruthenium on the dried zeolite (S40); and
drying the alkali metal- and ruthenium-impregnated zeolite (S50).

The method may further comprise, after step (S50), activating the dried zeolite by bringing the dried zeolite into contact with a reducing agent (S60).

The reducing agent may comprise hydrogen, ammonia, or a combination thereof.

In accordance with another aspect of the present disclosure, there is provided a method of preparing hydrogen comprising:
preparing hydrogen by bringing ammonia into contact with the catalyst for ammonia dehydrogenation (S100).

The step (S100) may be performed at a temperature of 300°C to 700°C.

The step (S100) may be performed at a gas hourly space velocity (GHSV) of 500 hr⁻¹ to 25,000 hr⁻¹.

### [Advantageous effects]

The catalyst for ammonia dehydrogenation according to one embodiment of the present disclosure is capable of preparing hydrogen from ammonia at a high yield.

### [Best mode]

Hereinafter, the catalyst for ammonia dehydrogenation according to one embodiment of the present disclosure will be described in detail.

As used herein, the term "intracrystalline cation" refers to a cation present in a zeolite crystal structure to compensate for charge deficiency that occurs when Si⁴⁺ is partially substituted with Al³⁺ in a (Si,Al)O₄ tetrahedron, which is a structural unit of zeolite, and may be easily substituted with other surrounding cations by ion exchange.

In addition, as used herein, the term "ion exchange method" refers to a method used to exchange an intracrystalline cation present in a zeolite crystal structure with a desired cation such as Cs⁺. In general, the ion exchange method is performed by preparing an aqueous solution of a substance containing a desired cation, adding zeolite to the prepared aqueous solution to obtain a slurry, and stirring the slurry under temperature, pressure, and time conditions desired by the user. After sufficient stirring, the slurry containing zeolite is filtered to obtain only a solid, and the solid is further washed and then is dried. At this time, only cations are exchanged due to the characteristics of zeolite and thus the anions present in the substance are removed along with the solution during the process of filtering the solution. Since ion exchange is a reaction, which is caused by substitution of Si⁴⁺ with Al³⁺, the amount of exchanged ion is theoretically as much as the number of moles of Al present in the zeolite. However, in reality, the amount of exchanged ion is much less than the theoretical value depending on the size and charge of the cation to be exchanged.

In addition, as used herein, the term "impregnation method" refers to a method generally used to impregnate an active metal or a promoter on a carrier, and means a method of adding a solution in an amount corresponding to the volume of pore of the carrier to the carrier to impregnate the active metal or a promoter on the surface of the carrier. Specifically, the solution is prepared by dissolving a substance containing a desired metal in a solvent for dissolving the substance and the amount of the solution may be greater than the pore volume depending on the solubility of the substance. When a catalyst is prepared through the impregnation method, a desired amount of metal may be easily impregnated in the carrier unlike the ion exchange method. However, because, in this case, the entire substance is impregnated in the carrier unlike the ion exchange method, only cations are not selectively impregnated. Therefore, removal of undesired anions may be required through post-treatment such as additional heat treatment.

In addition, as used herein, the term "conversion of ammonia" means a value calculated in accordance with the following Equation 1:

Conversion of ammonia (%) = moles of ammonia reacted / moles of ammonia supplied at a beginning stage × 100.

In addition, as used herein, the term "RFCC spent catalyst" means a spent catalyst derived from a residue fluid catalytic cracking unit.

In addition, here, BET (Brunauer-Emmett-Teller) specific surface area was measured using an ASAP2460 model device from Micromeritics.

The intracrystalline cation is present in the zeolite crystal structure, not on the surface of the zeolite and is distinguished from ruthenium, alkali metals, alkaline earth metals, and/or lanthanide metals present on the surface of the zeolite.

The intracrystalline cation may comprise a hydrogen ion (H⁺), a sodium ion (Na⁺), a potassium ion (K⁺), a calcium ion (Ca²⁺), a magnesium ion (Mg²⁺), a rubidium ion (Rb⁺), a cesium ion (Cs⁺), or a combination thereof.

The alkali metal is impregnated in the zeolite, is present inside and/or on the surface of the zeolite, not inside the cavity of the zeolite crystal structure, and is distinguished from the intracrystalline cation present in the zeolite crystal structure.

The amount of the alkali metal impregnated may be 5 to 50 parts by weight based on 100 parts by weight of the zeolite. When the amount of the alkali metal impregnated falls within the range defined above, a catalyst for ammonia dehydrogenation capable of improving the conversion of ammonia can be obtained.

In addition, the limited range of the amount of alkali metal impregnated does not vary depending on the type of zeolite, and the type and amount of intracrystalline cation, which was verified by numerous repeated experiments of the present inventors.

The alkali metal may comprise lithium (Li), sodium (Na), potassium (K), rubidium (Rb), cesium (Cs), francium (Fr), or a combination thereof.

The ruthenium (Ru), like the alkali metal, is impregnated in the zeolite and is present on the surface of the zeolite rather than inside the cavity of the zeolite crystal structure, and is distinguished from the intracrystalline cation present in the zeolite crystal structure.

The amount of the ruthenium impregnated may be 0.5 to 10 parts by weight based on 100 parts by weight of the zeolite. When the amount of the ruthenium impregnated falls within the range defined above, a catalyst for ammonia dehydrogenation capable of improving the conversion of ammonia can be obtained.

In addition, the limited range of the amount of ruthenium impregnated, like the limited range of the amount of the alkali metal impregnated, does not vary depending on the type of zeolite, and the type and amount of intracrystalline cation, which was verified by numerous repeated experiments of the present inventors.

Specifically, the amount of ruthenium impregnated may be 1 to 10 parts by weight based on 100 parts by weight of the zeolite.

The zeolite may have a Si/Al atomic ratio of 1 to 30. When the Si/Al atomic ratio falls within the range defined above, a catalyst for ammonia dehydrogenation capable of improving the conversion of ammonia can be obtained.

In addition, the limited range of Si/Al atomic ratio does not vary depending on the type of zeolite and the type and amount of intracrystalline cation, which was verified by numerous repeated experiments of the present inventors.

The zeolite may have a BET specific surface area of 300 to 900 m²/g. When the BET specific surface area falls within the range defined above, a catalyst for ammonia dehydrogenation capable of improving the conversion of ammonia can be obtained.

In addition, the limited range of the BET specific surface area does not vary depending on the type of zeolite, and the type and amount of intracrystalline cation, which was verified by numerous repeated experiments of the present inventors.

In addition, the catalyst for ammonia dehydrogenation may further comprise an alkaline earth metal, a lanthanide metal, or a combination thereof, which is impregnated in the zeolite.

The total amount of the impregnated alkali metal, alkaline earth metal, and lanthanide metal may be more than 5 parts by weight and not more than 50 parts by weight based on 100 parts by weight of the zeolite. Specifically, when the catalyst for ammonia dehydrogenation further comprises an alkaline earth metal, a lanthanide metal, or a combination thereof impregnated in the zeolite, the total amount of the impregnated alkaline earth metal and lanthanide metal can be arbitrarily adjusted within a range capable of achieving a target conversion of ammonia. Here, the target conversion of ammonia means a conversion of ammonia that can be obtained under the condition that the total amount of the alkaline earth metal and the lanthanide metal impregnated is "0" and the amount of the alkali metal impregnated is 5 to 50 parts by weight based on 100 parts by weight of the zeolite.

The zeolite may comprise zeolite X, zeolite Y, USY zeolite, ZSM-5, beta zeolite, chabazite zeolite (e.g., SSZ-13), SAPO series zeolite (e.g., SAPO-5, SAPO-11, SAPO-34), mordenite zeolite, zeolite L, zeolite A, RFCC spent catalyst, or a combination thereof. However, the present disclosure is not limited thereto and other types of zeolites may also fall within the scope of the present disclosure.

Hereinafter, a method of preparing a catalyst for ammonia dehydrogenation according to one embodiment of the present disclosure will be described in detail.

A method of preparing the catalyst for ammonia dehydrogenation according to one embodiment of the present disclosure comprises providing a zeolite having an intracrystalline cation (S10), impregnating an alkali metal on the zeolite (S20), drying the alkali metal-impregnated zeolite (S30), impregnating ruthenium on the dried zeolite (S40), and drying the alkali metal- and ruthenium-impregnated zeolite (S50).

The steps (S20) and (S30) should be performed before the steps (S40) and (S50) so that both the alkali metal and the ruthenium can be uniformly impregnated in desired amounts on the zeolite. When the step (S40) and step (S50) are performed earlier than the step (S20) and step (S30), the alkali metal cannot be uniformly impregnated in the desired amounts onto the zeolite.

In addition, the method of preparing the catalyst for ammonia dehydrogenation may further comprise activating the dried zeolite by bringing the dried zeolite into contact with a reducing agent (S60) after the step (S50). The step (S60) may be performed *in-situ* in the same reactor as the step (S50).

The reducing agent may be a substance capable of reducing the catalyst for ammonia dehydrogenation (particularly, ruthenium).

For example, the reducing agent may comprise hydrogen, ammonia, or a combination thereof.

Hereinafter, the method of preparing hydrogen according to one embodiment of the present disclosure using the catalyst for ammonia dehydrogenation will be described in detail.

The method of preparing hydrogen according to one embodiment of the present disclosure may comprise preparing hydrogen by bringing ammonia into contact with the catalyst for ammonia dehydrogenation (S100).

Step (S100) may be performed at a temperature of 300°C to 700°C.

In addition, Step (S100) may be performed at a gas hourly space velocity (GHSV) of 500 hr⁻¹ to 25,000 hr⁻¹.

Hereinafter, the present disclosure will be described with reference to the following examples, but the present disclosure is not limited to the following examples.

### Experimental Example 1: Impregnation of cesium (Cs) by impregnation method

Cesium (Cs) was impregnated into USY zeolite (Zeolyst, intracrystalline cation: H⁺, Si/Al atomic ratio: 15, BET surface area: 625 m²/g) using an incipient wetness impregnation method and then dried at 80°C for 12 hours. In this case, the target amount of cesium (Cs) and the actual amount impregnated (analyzed by ICP) are shown in Table 1 below.

### Experimental Example 2: Substitution of cesium (Cs) by ion exchange method

A part of the hydrogen ions (H⁺) in USY zeolite (Zeolyst, intracrystalline cation: H⁺, Si/Al atomic ratio: 15, BET surface area: 625 m²/g) was substituted with cesium ions (Cs⁺) by the ion exchange method at 70°C for 20 hours and then dried at 80°C for 12 hours. In this case, the target and actual amounts of cesium (Cs) substituted (analyzed by ICP) are shown in Table 1 below.

**[Table 1]**

| | USY zeolite content (100 parts by weight) | Target amount of Cs impregn ated (parts by weight) | Actual amount of Cs impregn ated (parts by weight) | Target amount of Cs substit uted (parts by weight) | Actual amount of Cs substitu ted (parts by weight) |
|---|---|---|---|---|---|
| Incipient wetness impregnat ion method | 100 | 10 | 8.2 | - | - |
| Ion exchange method | 100 | - | - | 5 | 1.9 |
| Ion exchange method | 100 | - | - | 10 | 2.1 |
| Ion exchange method | 100 | - | - | 20 | 2.2 |

As can be seen from Table 1 above, when ion exchange method is used, the actual amount of substituted Cs was significantly less than the target amount of substituted Cs and the actual amount of substituted Cs did not increase beyond a predetermined limit although the target amount of substituted Cs increased.

On the other hand, as can be seen from Table 2 below along with Table 1 above, when the impregnation method (i.e., initial wet impregnation method) is used, the actual amount of impregnated Cs was similar to the target amount of impregnated Cs and furthermore, the actual amount of impregnated Cs also increased as the target amount of impregnated Cs increased.

### Example 1: Preparation of catalyst for ammonia dehydrogenation

First, cesium (Cs) was impregnated as a promoter in USY zeolite (Zeolyst, intracrystalline cation: H⁺, Si/Al atomic ratio: 15, BET surface area: 625 m²/g) using the incipient wetness impregnation method and then dried at 80°C for 12 hours. Then, ruthenium (Ru) was further impregnated in the cesium-impregnated USY zeolite using the incipient wetness impregnation method and then dried at 80°C for 12 hours. As a result, a catalyst for ammonia dehydrogenation impregnated with 30 parts by weight of cesium (Cs) and 0.5 parts by weight of ruthenium (Ru) based on 100 parts by weight of the USY zeolite was obtained.

### Example 2: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 1.0 parts by weight of ruthenium (Ru) based on 100 parts by weight of USY zeolite was obtained.

### Example 3: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 4: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 5.0 parts by weight of ruthenium (Ru) based on 100 parts by weight of USY zeolite was obtained.

### Example 5: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 10.0 parts by weight of ruthenium (Ru) based on 100 parts by weight of USY zeolite was obtained.

### Example 6: Preparation of catalyst for ammonia dehydrogenation

A catalyst for ammonia dehydrogenation was prepared in the same manner as in Example 1, except that the amount of cesium (Cs) impregnated and the amount of ruthenium (Ru) impregnated were changed. As a result, a catalyst for ammonia dehydrogenation impregnated with 5.0 parts by weight of cesium (Cs) and 2.0 parts by weight of ruthenium (Ru) based on 100 parts by weight of USY zeolite was obtained.

### Example 7: Preparation of catalyst for ammonia dehydrogenation

A catalyst for ammonia dehydrogenation was prepared in the same manner as in Example 1, except that the amount of cesium (Cs) impregnated and the amount of ruthenium (Ru) impregnated were changed. As a result, a catalyst for ammonia dehydrogenation impregnated with 50 parts by weight of cesium (Cs) and 2.0 parts by weight of ruthenium (Ru) based on 100 parts by weight of USY zeolite was obtained.

### Example 8: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 1, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 9: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 30, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 10: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 15, BET surface area: 300 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 11: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 15, BET surface area: 900 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 12: Preparation of catalyst for ammonia dehydrogenation

A catalyst for ammonia dehydrogenation was prepared in the same manner as in Example 1, except that USY zeolite (Zeolyst, intracrystalline cation: Na⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 13: Preparation of catalyst for ammonia dehydrogenation

A catalyst for ammonia dehydrogenation was prepared in the same manner as in Example 1, except that USY zeolite (Zeolyst, intracrystalline cation: K⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 14: Preparation of catalyst for ammonia dehydrogenation

A catalyst for ammonia dehydrogenation was prepared in the same manner as in Example 1, except that USY zeolite (Zeolyst, intracrystalline cation: Ca²⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 15: Preparation of catalyst for ammonia dehydrogenation

A catalyst for ammonia dehydrogenation was prepared in the same manner as in Example 1, except that USY zeolite (Zeolyst, intracrystalline cation: Mg²⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 16: Preparation of catalyst for ammonia dehydrogenation

A catalyst for ammonia dehydrogenation was prepared in the same manner as in Example 1, except that USY zeolite (Zeolyst, intracrystalline cation: Ru⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 17: Preparation of catalyst for ammonia dehydrogenation

A catalyst for ammonia dehydrogenation was prepared in the same manner as in Example 1, except that USY zeolite (Zeolyst, intracrystalline cation: Cs⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 18: Preparation of catalyst for ammonia dehydrogenation

A catalyst for ammonia dehydrogenation was prepared in the same manner as in Example 1, except that zeolite X (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 19: Preparation of catalyst for ammonia dehydrogenation

A catalyst for ammonia dehydrogenation was prepared in the same manner as in Example 1, except that zeolite Y (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 20: Preparation of catalyst for ammonia dehydrogenation

A catalyst for ammonia dehydrogenation was prepared in the same manner as in Example 1, except that ZSM-5 (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 21: Preparation of catalyst for ammonia dehydrogenation

A catalyst for ammonia dehydrogenation was prepared in the same manner as in Example 1, except that beta zeolite (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 22: Preparation of catalyst for ammonia dehydrogenation

A catalyst for ammonia dehydrogenation was prepared in the same manner as in Example 1, except that chabazite (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 23: Preparation of catalyst for ammonia dehydrogenation

A catalyst for ammonia dehydrogenation was prepared in the same manner as in Example 1, except that SAPO series zeolites (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 24: Preparation of catalyst for ammonia dehydrogenation

A catalyst for ammonia dehydrogenation was prepared in the same manner as in Example 1, except that mordenite zeolite (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 25: Preparation of catalyst for ammonia dehydrogenation

A catalyst for ammonia dehydrogenation was prepared in the same manner as in Example 1, except that zeolite L (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 26: Preparation of catalyst for ammonia dehydrogenation

A catalyst for ammonia dehydrogenation was prepared in the same manner as in Example 1, except that zeolite A (Zeolyst, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 27: Preparation of catalyst for ammonia dehydrogenation

A catalyst for ammonia dehydrogenation was prepared in the same manner as in Example 1, except that RFCC spent catalyst (HD Hyundai Oilbank, intracrystalline cation: H⁺, Si/Al atomic ratio: 15, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Example 28: Preparation of catalyst for ammonia dehydrogenation

A catalyst for ammonia dehydrogenation was prepared in the same manner as in Example 1, except that lithium (Li) was used instead of cesium (Cs) as a promoter. As a result, a catalyst for ammonia dehydrogenation impregnated with 30 parts by weight of lithium (Li) and 2.0 parts by weight of ruthenium (Ru) based on 100 parts by weight of USY zeolite was obtained.

### Example 29: Preparation of catalyst for ammonia dehydrogenation

A catalyst for ammonia dehydrogenation was prepared in the same manner as in Example 1, except that sodium (Na) was used instead of cesium (Cs) as a promoter. As a result, a catalyst for ammonia dehydrogenation impregnated with 30 parts by weight of sodium (Na) and 2.0 parts by weight of ruthenium (Ru) based on 100 parts by weight of USY zeolite was obtained.

### Example 30: Preparation of catalyst for ammonia dehydrogenation

A catalyst for ammonia dehydrogenation was prepared in the same manner as in Example 1, except that potassium (K) was used instead of cesium (Cs) as a promoter. As a result, a catalyst for ammonia dehydrogenation impregnated with 30 parts by weight of potassium (K) and 2.0 parts by weight of ruthenium (Ru) based on 100 parts by weight of USY zeolite was obtained.

### Example 31: Preparation of catalyst for ammonia dehydrogenation

A catalyst for ammonia dehydrogenation was prepared in the same manner as in Example 1, except that rubidium (Rb) was used instead of cesium (Cs) as a promoter. As a result, a catalyst for ammonia dehydrogenation impregnated with 30 parts by weight of rubidium (Rb) and 2.0 parts by weight of ruthenium (Ru) based on 100 parts by weight of USY zeolite was obtained.

### Example 32: Preparation of catalyst for ammonia dehydrogenation

A catalyst for ammonia dehydrogenation was prepared in the same manner as in Example 1, except that francium (Fr) was used instead of cesium (Cs) as a promoter. As a result, a catalyst for ammonia dehydrogenation impregnated with 30 parts by weight of francium (Fr) and 2.0 parts by weight of ruthenium (Ru) based on 100 parts by weight of USY zeolite was obtained.

### Reference Example 1: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 0.1 parts by weight of ruthenium (Ru) based on 100 parts by weight of USY zeolite was obtained.

### Reference Example 2: Preparation of catalyst for ammonia dehydrogenation

A catalyst for ammonia dehydrogenation was prepared in the same manner as in Example 1, except that the amount of ruthenium (Ru) impregnated was changed. As a result, a catalyst for ammonia dehydrogenation impregnated with 30 parts by weight of cesium (Cs) and 15 parts by weight of ruthenium (Ru) based on 100 parts by weight of USY zeolite was obtained.

### Reference Example 3: Preparation of catalyst for ammonia dehydrogenation

A catalyst for ammonia dehydrogenation was prepared in the same manner as in Example 1, except that the amount of cesium (Cs) impregnated and the amount of ruthenium (Ru) impregnated were changed. As a result, a catalyst for ammonia dehydrogenation impregnated with 0.3 parts by weight of cesium (Cs) and 2 parts by weight of ruthenium (Ru) based on 100 parts by weight of USY zeolite was obtained.

### Reference Example 4: Preparation of catalyst for ammonia dehydrogenation

A catalyst for ammonia dehydrogenation was prepared in the same manner as in Example 1, except that the amount of cesium (Cs) impregnated and the amount of ruthenium (Ru) impregnated were changed. As a result, a catalyst for ammonia dehydrogenation impregnated with 0.5 parts by weight of cesium (Cs) and 2 parts by weight of ruthenium (Ru) based on 100 parts by weight of USY zeolite was obtained.

### Reference Example 5: Preparation of catalyst for ammonia dehydrogenation

A catalyst for ammonia dehydrogenation was prepared in the same manner as in Example 1, except that the amount of cesium (Cs) impregnated and the amount of ruthenium (Ru) impregnated were changed. As a result, a catalyst for ammonia dehydrogenation impregnated with 60 parts by weight of cesium (Cs) and 2 parts by weight of ruthenium (Ru) based on 100 parts by weight of USY zeolite was obtained.

### Reference Example 6: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 0.5, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Reference Example 7: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 35, BET surface area: 625 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Reference Example 8: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 15, BET surface area: 250 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Reference Example 9: Preparation of catalyst for ammonia dehydrogenation

A catalyst for ammonia dehydrogenation was prepared in the same manner as in Example 1, except that USY zeolite (Zeolyst, intracrystalline cation: H⁺, Si/Al atomic ratio: 15, BET surface area: 950 m²/g) was used instead of USY zeolite (Zeolyst, intracrystalline cation: H⁺, Si/Al atomic ratio: 15, BET surface area: 625 m²/g). As a result, a catalyst for ammonia dehydrogenation impregnated with 30 parts by weight of cesium (Cs) and 2.0 parts by weight of ruthenium (Ru) based on 100 parts by weight of USY zeolite was obtained.

### Comparative Example 1: Preparation of control catalyst

First, a part of the hydrogen ions (H⁺) in the USY zeolite (Zeolyst, intracrystalline cation: H⁺) was substituted with cesium ions (Cs⁺) at 70°C for 20 hours using an ion exchange method and then dried at 80°C for 12 hours. Then, ruthenium (Ru) was impregnated in the USY zeolite on which the cesium ions were substituted using an initial wet impregnation method and then dried at 80°C for 12 hours. As a result, a control catalyst substituted with 2.1 parts by weight of cesium (Cs) and impregnated with 2 parts by weight of ruthenium (Ru) based on 100 parts by weight of USY zeolite was obtained.

The compositions of the catalysts prepared in Examples 1 to 32, Reference Examples 1 to 9, and Comparative Example 2 are summarized and shown in Table 2 below.

**[Table 2]**

| | Zeolite | | | | | Promoter | | Amoun t of Cs subst itute d (part s by weigh t) | Amoun t of Ru impre gnate d (part s by weigh t) |
|---|---|---|---|---|---|---|---|---|---|
| | Type | Si/Al atomi c ratio | BET speci fic surfa ce area (m²/g ) | Intr acry stal line cati on | Conte nt (part s by weigh t) | Type | Con ten t (pa rts by wei ght ) | | |
| Example 1 | USY | 15 | 625 | H⁺ | 100 | Cs | 30 | 0 | 0.5 |
| Example 2 | USY | 15 | 625 | H⁺ | 100 | Cs | 30 | 0 | 1.0 |
| Example 3 | USY | 15 | 625 | H⁺ | 100 | Cs | 30 | 0 | 2.0 |
| Example 4 | USY | 15 | 625 | H⁺ | 100 | Cs | 30 | 0 | 5.0 |
| Example 5 | USY | 15 | 625 | H⁺ | 100 | Cs | 30 | 0 | 10.0 |
| Example 6 | USY | 15 | 625 | H⁺ | 100 | Cs | 5 | 0 | 2.0 |
| Example 7 | USY | 15 | 625 | H⁺ | 100 | Cs | 50 | 0 | 2.0 |
| Example 8 | USY | 1 | 625 | H⁺ | 100 | Cs | 30 | 0 | 2.0 |
| Example 9 | USY | 30 | 625 | H⁺ | 100 | Cs | 30 | 0 | 2.0 |
| Example 10 | USY | 15 | 300 | H⁺ | 100 | Cs | 30 | 0 | 2.0 |
| Example 11 | USY | 15 | 900 | H⁺ | 100 | Cs | 30 | 0 | 2.0 |
| Example 12 | USY | 15 | 625 | Na⁺ | 100 | Cs | 30 | 0 | 2.0 |
| Example 13 | USY | 15 | 625 | K⁺ | 100 | Cs | 30 | 0 | 2.0 |
| Example 14 | USY | 15 | 625 | Ca²⁺ | 100 | Cs | 30 | 0 | 2.0 |
| Example 15 | USY | 15 | 625 | Mg²⁺ | 100 | Cs | 30 | 0 | 2.0 |
| Example 16 | USY | 15 | 625 | Rb⁺ | 100 | Cs | 30 | 0 | 2.0 |
| Example 17 | USY | 15 | 625 | Cs⁺ | 100 | Cs | 30 | 0 | 2.0 |
| Example 18 | Zeolit e X | 15 | 625 | H⁺ | 100 | Cs | 30 | 0 | 2.0 |
| Example 19 | Zeolit e Y | 15 | 625 | H⁺ | 100 | Cs | 30 | 0 | 2.0 |
| Example 20 | ZSM-5 | 15 | 625 | H⁺ | 100 | Cs | 30 | 0 | 2.0 |
| Example 21 | Beta zeolit e | 15 | 625 | H⁺ | 100 | Cs | 30 | 0 | 2.0 |
| Example 22 | Chabaz ite | 15 | 625 | H⁺ | 100 | Cs | 30 | 0 | 2.0 |
| Example 23 | SAPO series zeolit e | 15 | 625 | H⁺ | 100 | Cs | 30 | 0 | 2.0 |
| Example 24 | Morden ite | 15 | 625 | H⁺ | 100 | Cs | 30 | 0 | 2.0 |
| Example 25 | zeolit e L | 15 | 625 | H⁺ | 100 | Cs | 30 | 0 | 2.0 |
| Example 26 | zeolit e A | 15 | 625 | H⁺ | 100 | Cs | 30 | 0 | 2.0 |
| Example 27 | RFCC spent cataly st | 15 | 625 | H⁺ | 100 | Cs | 30 | 0 | 2.0 |
| Example 28 | USY | 15 | 625 | H⁺ | 100 | Li | 30 | 0 | 2.0 |
| Example 29 | USY | 15 | 625 | H⁺ | 100 | Na | 30 | 0 | 2.0 |
| Example 30 | USY | 15 | 625 | H⁺ | 100 | K | 30 | 0 | 2.0 |
| Example 31 | USY | 15 | 625 | H⁺ | 100 | Rb | 30 | 0 | 2.0 |
| Example 32 | USY | 15 | 625 | H⁺ | 100 | Fr | 30 | 0 | 2.0 |
| Reference Example 1 | USY | 15 | 625 | H⁺ | 100 | Cs | 30 | 0 | 0.1 |
| Reference Example 2 | USY | 15 | 625 | H⁺ | 100 | Cs | 30 | 0 | 15 |
| Reference Example 3 | USY | 15 | 625 | H⁺ | 100 | Cs | 0.3 | 0 | 2.0 |
| Reference Example 4 | USY | 15 | 625 | H⁺ | 100 | Cs | 0.5 | 0 | 2.0 |
| Reference Example 5 | USY | 15 | 625 | H⁺ | 100 | Cs | 60 | 0 | 2.0 |
| Reference Example 6 | USY | 0.5 | 625 | H⁺ | 100 | Cs | 30 | 0 | 2.0 |
| Reference Example 7 | USY | 35 | 625 | H⁺ | 100 | Cs | 30 | 0 | 2.0 |
| Reference Example 8 | USY | 15 | 250 | H⁺ | 100 | Cs | 30 | 0 | 2.0 |
| Reference Example 9 | USY | 15 | 950 | H⁺ | 100 | Cs | 30 | 0 | 2.0 |
| Comparativ e Example 1 | USY | 15 | 625 | H⁺ | 100 | Cs | 0 | 2.1 | 2 |

### Test Example 1: Test for conversion of ammonia

The catalysts prepared in Examples 1 to 32, Reference Examples 1 to 9, and Comparative Example 1 were activated by *in-situ* hydrogen treatment. Then, 100% ammonia gas was brought into contact with each catalyst under the conditions of atmospheric pressure (1 atm), 450°C, and a gas hourly space velocity (GHSV) of 12,000 hr⁻¹, the conversion of ammonia was evaluated in accordance with Equation 1, and the results are shown in Table 3 below.

**[Table 3]**

| | Example | | | | | | | | | | | | | |
|---|---|---|---|---|---|---|---|---|---|---|---|---|---|---|
| | 1 | 2 | 3 | 4 | | 5 | 6 | 7 | | 8 | | 9 | | 10 |
| Conversion of ammonia (%) | 68.7 | 80.0 | 94 .1 | 92 . 8 | | 83.5 | 74. 7 | 88.3 | | 91.6 | | 83.8 | | 83.8 |

| | Example | | | | | | | | | | | | | |
|---|---|---|---|---|---|---|---|---|---|---|---|---|---|---|
| | 11 | 12 | 13 | 14 | | 15 | 16 | 17 | | 18 | | 19 | | 20 |
| Conversion of ammonia (%) | 91.6 | 94.1 | 94 .2 | 93 .6 | | 93.8 | 94. 4 | 94.6 | | 96.6 | | 95.4 | | 94.2 |

| | Example | | | | | | | | | | | | | |
|---|---|---|---|---|---|---|---|---|---|---|---|---|---|---|
| | 21 | 22 | 23 | 24 | | 25 | 26 | 27 | | 28 | | 29 | | 30 |
| Conversion of ammonia (%) | 94.8 | 94.5 | 91 .5 | 98 .1 | | 96.6 | 92. 8 | 90.5 | | 89.5 | | 89.9 | | 92.3 |

| | Example | | Reference Example | | | | | | | | | | | |
|---|---|---|---|---|---|---|---|---|---|---|---|---|---|---|
| | 31 | 32 | 1 | | 2 | | 3 | | 4 | | 5 | | 6 | |
| Conversion of ammonia (%) | 92.9 | 94.4 | 5.3 | | 63.0 | | 13.6 | | 23.8 | | 60.4 | | 54.9 | |

| | Reference Example | | | | Comparative Example | | | | | | | | | |
|---|---|---|---|---|---|---|---|---|---|---|---|---|---|---|
| | 7 | 8 | 9 | | 1 | | | | | | | | | |
| Conversion of ammonia (%) | 58.1 | 61.6 | 63.8 | | 24.3 | | | | | | | | | |

As can be seen from Table 3, the catalysts prepared in Examples 1 to 32 had higher conversion of ammonia than those of the catalysts prepared in Reference Examples 1 to 9 and Comparative Example 1.

In addition, according to the present disclosure, a catalyst for ammonia dehydrogenation was prepared by impregnating only cesium (Cs) as an alkali metal and the activity (i.e., conversion of ammonia) of the ammonia dehydrogenation catalyst thus prepared was measured. However, since all alkali metals have substantially the same characteristics, although a catalyst for ammonia dehydrogenation is prepared by impregnating other alkali metals such as lithium (Li), sodium (Na), potassium (K), rubidium (Rb), francium (Fr), or a combination thereof, instead of cesium (Cs), substantially the same results as the data shown in Tables 2 and 3 above can be obtained, which is obvious to those skilled in the art.

Although the preferred embodiments of the present disclosure have been disclosed for illustrative purposes, those skilled in the art will appreciate that various modifications, additions and substitutions are possible, without departing from the scope and spirit of the disclosure as disclosed in the accompanying claims. Accordingly, the scope of the present disclosure should be defined by the appended claims.

## Claims

1. A catalyst for ammonia dehydrogenation comprising:
a zeolite having an intracrystalline cation; and
an alkali metal and ruthenium impregnated in the zeolite.

2. The catalyst for ammonia dehydrogenation according to claim 1, wherein the intracrystalline cation comprises a hydrogen ion (H⁺), a sodium ion (Na⁺), a potassium ion (K⁺), a calcium ion (Ca²⁺), a magnesium ion (Mg²⁺), a rubidium ion (Rb⁺), a cesium ion (Cs⁺), or a combination thereof.

3. The catalyst for ammonia dehydrogenation according to claim 1, wherein the catalyst for ammonia dehydrogenation comprises 5 to 50 parts by weight of the alkali metal impregnated based on 100 parts by weight of the zeolite.

4. The catalyst for ammonia dehydrogenation according to claim 1, wherein the alkali metal comprises lithium (Li), sodium (Na), potassium (K), rubidium (Rb), cesium (Cs), francium (Fr), or a combination thereof.

5. The catalyst for ammonia dehydrogenation according to claim 1, wherein the catalyst for ammonia dehydrogenation comprises 0.5 to 10 parts by weight of the ruthenium impregnated based on 100 parts by weight of the zeolite.

6. The catalyst for ammonia dehydrogenation according to claim 5, wherein the catalyst for ammonia dehydrogenation comprises 1 to 10 parts by weight of the ruthenium impregnated based on 100 parts by weight of the zeolite.

7. The catalyst for ammonia dehydrogenation according to claim 1, wherein the zeolite has a Si/Al atomic ratio of 1 to 30.

8. The catalyst for ammonia dehydrogenation according to claim 1, wherein the zeolite has a BET surface area of 300 to 900 m²/g.

9. The catalyst for ammonia dehydrogenation according to claim 1, further comprising an alkaline earth metal, a lanthanide metal, or a combination thereof impregnated in the zeolite.

10. The catalyst for ammonia dehydrogenation according to claim 9, wherein a total amount of the alkali metal, the alkaline earth metal, and the lanthanide metal impregnated is more than 5 parts by weight and not more than 50 parts by weight based on 100 parts by weight of the zeolite.

11. The catalyst for ammonia dehydrogenation according to claim 1, wherein the zeolite comprises zeolite X, zeolite Y, USY zeolite, ZSM-5, beta zeolite, chabazite zeolite, SAPO series zeolite, mordenite zeolite, zeolite L, zeolite A, RFCC spent catalyst, or a combination thereof.

12. A method of preparing a catalyst for ammonia dehydrogenation comprising:
providing a zeolite having an intracrystalline cation (S10);
impregnating an alkali metal on the zeolite (S20);
drying the alkali metal-impregnated zeolite (S30);
impregnating ruthenium on the dried zeolite (S40); and
drying the alkali metal- and ruthenium-impregnated zeolite (S50).

13. The method according to claim 12, further comprising, after the step (S50), activating the dried zeolite by bringing the dried zeolite into contact with a reducing agent (S60).

14. The method according to claim 13, wherein the reducing agent comprises hydrogen, ammonia, or a combination thereof.

15. A method of preparing hydrogen comprising:
preparing hydrogen by bringing ammonia into contact with the catalyst according to any one of claims 1 to 11 for ammonia dehydrogenation (S100).

16. The method according to claim 15, wherein the step (S100) is performed at a temperature of 300°C to 700°C.

17. The method according to claim 15, wherein the step (S100) is performed at a gas hourly space velocity (GHSV) of 500 hr⁻¹ to 25,000 hr⁻¹.
